# EUROPÄISCHE PATENTSCHRIFT

(11) **EP 2 621 868 B1**
(45) Veröffentlichungstag und Bekanntmachung des Hinweises auf die Patenterteilung: **05.11.2014**
(21) Anmeldenummer: 11773178.6
(22) Anmeldetag: 29.09.2011
(51) Int. Cl.: C03C 17/245, C03C 17/34

(54) **HITZESCHUTZVERGLASUNG UND VERFAHREN ZU DEREN HERSTELLUNG**
HEAT PROTECTION GLAZING AND METHOD FOR PRODUCING THE SAME
VITRE DE PROTECTION CONTRE LA CHALEUR ET PROCÉDÉ DE FABRICATION DE LADITE VITRE

(30) Priorität: 30.09.2010 DE 102010046991
(43) Veröffentlichungstag der Anmeldung: 07.08.2013
(73) Patentinhaber: SCHOTT AG, 55122 Mainz (DE)
(72) Erfinder: HENN, Christian, 55546 Frei-Laubersheim (DE); LUTHER, Veit, 65795 Hattersheim (DE); MÜLLER, Martin, 64285 Darmstadt (DE)
(74) Vertreter: Blumbach Zinngrebe
(86) Internationale Anmeldenummer: PCT/EP2011/004864
(87) Internationale Veröffentlichungsnummer: WO 2012/041499

(56) Entgegenhaltungen:
- EP-A1- 2 128 876
- EP-A1- 2 184 743
- US-A1- 2007 218 646
- US-A1- 2010 092 747

## Beschreibung

Die Erfindung betrifft allgemein das Gebiet von Hitzeschutzverglasungen. Insbesondere betrifft die Erfindung Hitzeschutzverglasungen, die mit infrarotreflektierenden Beschichtungen ausgestattet sind. Hitzeschutzverglasungen werden beispielsweise als Backofenscheiben oder Scheiben von Kaminöfen eingesetzt. Um Infrarotstrahlung in den Heißraum eines solchen Aggregats zurückzureflektieren, ist es bekannt, transparente, elektrisch leitende Beschichtungen einzusetzen. Geeignet sind beispielsweise Indium-Zinn-Oxid und Fluor-dotiertes Zinnoxid. Die Langzeitstabilität dieser Schichten ist allerdings unzureichend, da sich durch die Einwirkung hoher Temperaturen im Allgemeinen die Plasmakante dieser Schichten so verschiebt, dass die Reflexions-Effizienz deutlich abnimmt. Zudem sind die besonders wirksamen Indium-Zinn-Oxid-Schichten vergleichsweise teuer in der Herstellung. Weiterhin kann sich auch die Transparenz der Schichten verändern.

Aus der EP 1 518 838 B1 ist ein Beobachtungsfenster mit einer mehrlagigen Beschichtung für Hochtemperatur-Anwendungen, beispielsweise für Glasschmelzöfen und Müllverbrennungsanlagen bekannt. Indium-Zinn-Oxid wird alternativ zu metallischem Titan als eine der Schichten eingesetzt. Die Beschichtung soll gleichzeitig lichtabschirmend wirken, so dass eine hohe Transparenz hier unerwünscht ist. Die Transmission im sichtbaren Spektralbereich soll nicht mehr als 10% betragen. Ein weiteres Problem bei der Beständigkeit von Beschichtungen liegt vor, wenn der Temperaturausdehnungskoeffizient des Substrats klein ist. Kleine Temperaturausdehnungskoeffizienten sind aber gerade günstig für temperaturfeste Gläser und Glaskeramiken. Ist der Temperaturausdehnungskoeffizient klein, so kann die Beschichtung bei starker Erwärmung der Hitzeschutzverglasung aufgrund der Unterschiede der Temperaturausdehnungskoeffizienten von Beschichtung und Substrat und der damit einhergehenden mechanischen Spannungen aufreißen oder sogar abplatzen.

Es besteht demgemäß das Problem, eine kostengünstige, auch gegenüber sehr lang andauernden Temperaturbelastungen stabile und wirksame infrarotreflektierende Beschichtung auf temperaturstabilen transparenten Substraten zu schaffen, die aber im sichtbaren Spektralbereich transparent ist. Diese Aufgabe der Erfindung wird durch den Gegenstand der unabhängigen Ansprüche gelöst. Vorteilhafte Ausführungsformen und Weiterbildungen der Erfindung sind in den jeweiligen abhängigen Ansprüchen angegeben.

Demgemäß sieht die Erfindung ein thermisches Prozessaggregat mit einem Heißraum und einem den Heißraum abschließenden Fenster vor, welches eine Hitzeschutzverglasung mit einer Hochtemperatur-Infrarotreflexionsfilter- Beschichtung umfasst, wobei die Hitzeschutzverglasung eine Glas- oder Glaskeramikscheibe mit einem linearen Temperaturausdehnungskoeffizienten α von vorzugsweise kleiner 4,2·10⁻⁶/K umfasst, wobei auf zumindest einer Seite der Glas- oder Glaskeramikscheibe eine Titandioxid-Schicht abgeschieden ist, welche mit einer Verbindung zumindest eines der Übergangsmetalle Nb, Ta, Mo, V" vorzugsweise einem Übergangsmetall-Oxid dotiert ist, so dass die Titandioxid-Schicht einen Flächenwiderstand von höchstens 2MΩ aufweist, und wobei die Titandioxid-Schicht eine Schichtdicke aufweist, deren optische Dicke einem Viertel der Wellenlänge des Maximums eines Schwarzkörperstrahlers mit einer Temperatur zwischen 400 °C und 3000 °C entspricht. Es hat sich überraschend gezeigt, dass die erfindungsgemäß dotierten Titandioxid-Schichten auch im Langzeitbetrieb unter hoher Temperaturbelastung trübungsfrei bleiben.

Das Verfahren zur Herstellung einer solchen Hitzeschutzverglasung mit Hochtemperatur-Infrarotreflexionsfilter- Beschichtung basiert dementsprechend darauf, dass auf einer Glas- oder Glaskeramik-Scheibe eine mit einer Verbindung eines der Übergangsmetalle Nb, Ta, Mo dotierte Titandioxid-Schicht abgeschieden wird, die so dotiert ist, dass deren Flächenwiderstand höchstens 2MΩ beträgt und deren optische Dicke einem Viertel der Wellenlänge des Maximums eines Schwarzkörperstrahlers mit einer Temperatur zwischen 400 °C und 3000 °C entspricht. Gemäß einer ersten Ausführungsform der Erfindung wird dabei auf einem Glas- oder Glaskeramik-Substrat mit niedrigem linearen Temperaturausdehnungskoeffizienten a von kleiner 4,2·10⁻⁶/K die Beschichtung abgeschieden.

Gemäß einer weiteren Ausführungsform kann die niedrige Temperaturausdehnung auch nachträglich nach der Abscheidung durch einen weiteren Prozessschritt bewirkt werden. Hierbei kommt insbesondere eine Keramisierung in Betracht. Demgemäß wird die Titandioxid-Schicht auf einer Glasscheibe abgeschieden und die beschichtete Glasscheibe anschließend keramisiert, so dass eine mit der dotierten Titandioxidschicht beschichtete Glaskeramik-Scheibe mit einem linearen Temperaturausdehnungskoeffizienten α von kleiner 4,2·10⁻⁶/K erhalten wird.

Es ist hierbei höchst überraschend, dass die erfindungsgemäße Beschichtung nach der Keramisierung trübungsfrei bleibt. Es ist gemäß noch einer Weiterbildung der Erfindung sogar möglich, die Glas- oder Glaskeramikscheibe nach der Abscheidung der Hochtemperatur-Infrarotreflexionsfilter- Beschichtung in einem Heißformungsschritt zu verformen. Gemäß einer Weiterbildung dieser Ausführungsform der Erfindung wird die dotierte Titandioxid-Schicht dabei auf einer Scheibe aus keramisierbarem Glas abgeschieden. Derartige Glasscheiben aus keramisierbarem Glas werden auch als Grünglas-Scheiben bezeichnet. Eine Heißumformung wird gemäß dieser Weiterbildung während der bei der Keramisierung auftretenden Erweichung der Scheibe durchgeführt.

Titandioxid ist ein Verbindungshalbleiter und wird durch die Zugabe der Übergangsmetalle, vorzugsweise in oxidischer Form, dazu angeregt, freie Ladungsträger zur Verfügung zu stellen. Dies hat zur Folge, dass aus rein dielektrischem Titanoxid eine leitfähige Beschichtung erzielt werden kann. Es hat sich gezeigt, dass die mit dem Übergangsmetall, beziehungsweise einer Übergangsmetall-Verbindung dotierten Titandioxid-Schichten gleichzeitig sehr temperaturstabil sind und nicht etwa durch eine Verschiebung der Plasmakante erheblich im Verlaufe der im thermischen Prozessaggregat betriebsbedingten Temperatureinwirkung degradieren. Zusätzlich wird die Titandioxid-Schicht erfindungsgemäß interferenzoptisch genutzt, indem diese als λ/4-Schicht für die auf die Schicht treffende Infrarotstrahlung wirkt. Die erfindungsgemäße Hochtemperatur-Infrarotreflexionsfilter-Beschichtung wirkt damit als sowohl transparent leitfähiges oxid wie auch interferenzoptisch reflektierende Schicht.

Die oben genannte Eigenschaft einer λ/4-Schicht für Temperaturstrahlung bei Temperaturen zwischen 400°C und 3000°C kann typischerweise mit einer Schichtdicke, die im Bereich von 80 bis 250, besonders bevorzugt 100 bis 150 Nanometern liegt, erreicht werden. Eine Schichtdicke von 750 Nanometern entspricht bei typischen Brechungsindizes der dotierten Schicht einer optischen Dicke von λ/4, die auf ein Maximum einer spektralen Intensitätsverteilung eines Temperaturstrahlers mit einer Temperatur von 400°C abgestimmt ist. Bevorzugt werden aber auf höhere Temperaturen abgestimmte, also dünnere Schichten. Dies liegt unter anderem daran, dass der Energiegehalt mit kleinerer Wellenlänge zunimmt, so dass eine Abstimmung auf kleinere Wellenlängen als diejenige des Maximums der spektralen Intensitätsverteilung sinnvoll sein kann.

Eine gute Leitfähigkeit der Beschichtung kann insbesondere erzielt werden, wenn Kationen im Gitter durch höherwertige Ionen ersetzt werden, so dass Elektronen in das Leitungsband abgegeben werden und damit Leitfähigkeit erzeugen.

Als besonders geeignet haben sich Dotanten erwiesen, welche sich in Form und Größe nicht allzu signifikant von Titan unterscheiden, so dass eine hohe Dotiereffizienz, also eine hohe Anzahl von abgegebenen Elektronen pro Fremdatom erzielt wird. Diese Bedingungen werden insbesondere durch Verbindungen zumindest einem der Übergangsmetalle Nb, Ta, Mo, V erfüllt. Niob und Tantal sind unter den vorgenannten Übergangsmetallen als Dotierung zur Erzielung eines niedrigen Flächenwiderstandes, beziehungsweise einer hohen Leitfähigkeit besonders geeignet. Mit Dotierungen dieser Metalle, beziehungsweise deren Verbindungen können spezifische Widerstände von kleiner 2·10⁻³ Ω·cm, insbesondere im Bereich von 1·10⁻³ Ω·cm erzielt werden. Der Flächenwiderstand erfindungsgemäßer Schichten kann damit kleiner als 1 kΩ sein. Derartige niedrige Flächenwiderstände sind aber auch gegebenenfalls mit anderen Übergangsmetallen, beziehungsweise deren Verbindungen als Dotierung erzielbar.

Um die Titandioxid-Schicht abzuscheiden, eignet sich insbesondere das Sputterverfahren. Das Sputtern kann reaktiv erfolgen, wobei ein metallisches Target verwendet wird. Gemäß einer weiteren Ausführungsform wird ein keramisches Target verwendet. Um die Dotierung einzubringen, ist es dazu am einfachsten, ein mit dem Übergangsmetall dotiertes Target zu verwenden. Im Falle eines oxidierten, keramischen Targets ist in diesem Fall auch eine ausreichende Leitfähigkeit entsprechend der abgeschiedenen Schicht im Target vorhanden. Möglich ist aber auch beispielsweise eine Co-Deposition von zwei Targets.

Ein Flächenwiderstand der Titandioxid-Schicht von höchstens 2MΩ kann typischerweise durch eine Dotierung mit einer Übergangsmetall-Verbindung in einer Menge von 1 bis 10 Gewichtsprozent, vorzugsweise 3 bis 6 Gewichtsprozent erzielt werden. Mit diesen Bereichen der Dotierung wird auch eine gute Transparenz der Schicht erzielt. Höhere Dotierungen führen zu einer vermehrten Belegung der Zwischengitterplätze und damit zu einer Reduktion der Transparenz. Beispielsweise kann dazu ein mit 1 bis 10 Gewichtsprozent Nioboxid dotiertes Titanoxid-Target verwendet werden. Alternativ kann die dotierte Titandioxid-Schicht durch reaktives Sputtern in einer sauerstoffhaltigen Atmosphäre hergestellt werden.

Es hat sich weiterhin als besonders vorteilhaft erwiesen, wenn die Titandioxid-Schicht eine Kristallphase.enthält. Dabei zeigt die Anatas-Kristallphase besonders günstige Eigenschaften. Dies ist insofern überraschend, als dass Anatas bei hohen Temperaturen in Rutil übergeht. An sich würde man daher erwarten, dass die Anatas-haltige Schicht weniger temperaturstabil ist, wohingegen die abgeschiedenen Schichten eine hohe Langzeitbeständigkeit aufweisen, ohne dass sich die Schichtmorphologie wesentlich ändert. Anatas-haltige Schichten haben sich außerdem aufgrund der erzielbaren guten Leitfähigkeit als günstig erwiesen. Es hat sich gezeigt, dass die Schichtwiderstände einer Anatashaltigen Schicht bei gleicher Dotierung geringer sind, als beispielsweise bei einer Rutil-haltigen Schicht.

Vorzugsweise ist die Titandioxid-Schicht jedoch nicht rein kristallin. Die besten Ergebnisse hinsichtlich der Temperaturstabilität und der Leitfähigkeit konnten vielmehr erzielt werden, wenn die Titandioxid-Schicht auch eine röntgenamorphe Phase enthält. Dies ist wiederum überraschend, da man annehmen könnte, dass sich das Gleichgewicht zwischen den Phasen durch die Temperatureinwirkung ändern könnte. Gemäß einer besonders vorteilhaften Ausführungsform der Erfindung enthält die Titandioxid-Schicht also eine kristalline Phase und eine röntgenamorphe Phase zur Erzielung hoher Leitfähigkeiten und einer hohen Temperaturstabilität.

Weiterhin ist es vorteilhaft, wenn die Anatas-Kristallphase gegenüber weiteren Kristallphasen mindestens überwiegt, vorzugsweise, wenn die Anatas-Kristallphase die einzige vorhandene Kristallphase der Titandioxid-Schicht ist.

Der Begriff "röntgenamorph" bedeutet in diesem Zusammenhang, dass diese Phase in einer Röntgen-Diffraktionsmessung keine scharfen Röntgenbeugungs-Maxima zeigt.

Sehr gute untersuchte Schichten zeigen auch anhand von Röntgenbeugungs-Spektren insbesondere die Eigenschaft, dass der Stoffmengenanteil der röntgenamorphen Phase größer ist, als der Stoffmengenanteil der Anatas-Kristallphase. Andere Kristallphasen treten, wie oben erwähnt, vorzugsweise nicht oder verglichen mit der Anatas-Phase geringerem Anteil auf. Mit anderen Worten sind dieser Schichten teilweise amorph mit einem kleineren Anteil einer Anatas-Phase. Überraschend ist hierbei auch die gute elektrische Leitfähigkeit solcher Schichten, obwohl amorphe Stoffe typischerweise eine geringere Leitfähigkeit aufweisen.

Um die dotierte Titandioxid-Schicht als Anatas-haltige Schicht mit hoher thermischer Beständigkeit abzuscheiden, hat es sich als günstig erwiesen, bei der Abscheidung der Schicht die Glas- oder Glaskeramik-Scheibe auf zumindest 250°C vorzuheizen.

Die Erfindung wird nachfolgend anhand von Ausführungsbeispielen und den beigeschlossenen Figuren näher erläutert. Es zeigen:
Fig. 1 ein thermisches Prozessaggregat mit Hitzeschutzverglasung,
Fig. 2 gemessene Spektren der Reflektivität als Funktion der Wellenlänge,
Fig. 3 Röntgenbeugungsspektren an Titanoxid-Schichten,
Fig. 4 einen Meßaufbau zur Messung der Effizienz infrarotreflektierender Beschichtungen,
Fig. 5 in Abhängigkeit der Zeit mittels des in Fig. 4 gezeigten Meßaufbaus aufgezeichnete Temperaturkurven,
Fig. 6A bis 6C Verfahrensschritte zur Herstellung einer Hitzeschutzverglasung, und
Fig. 7 ein Ausführungsbeispiel, bei welchem auf der Glas- oder Glaskeramikscheibe eine Zwischenschicht abgeschieden ist.

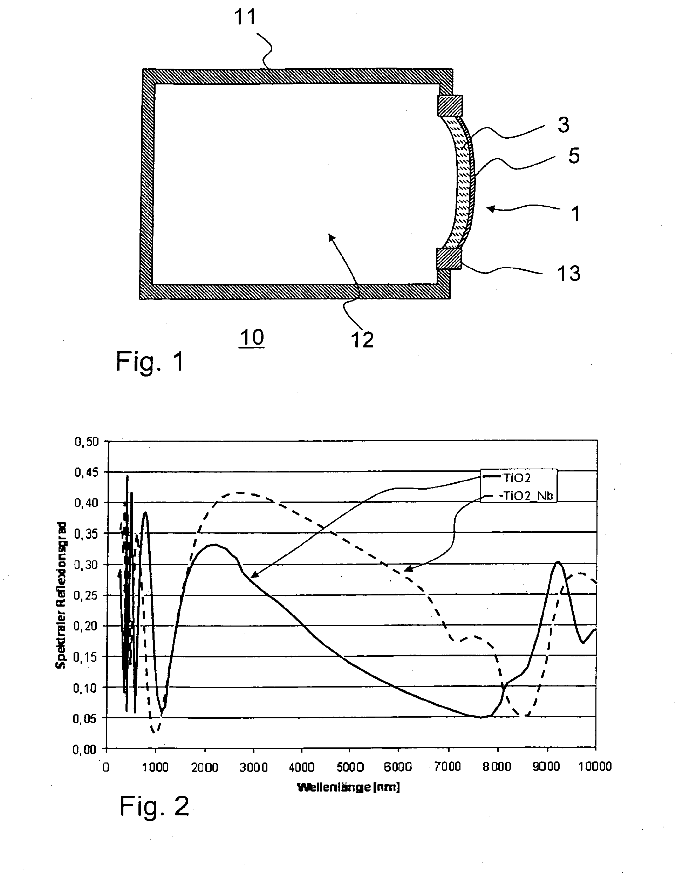

Fig. 1 zeigt ein thermisches Prozessaggregat 10 mit einem von einer Wandung 11 umschlossenen Heißraum 12 und einem den Heißraum 12 abschließenden Fenster 13, welches eine erfindungsgemäße Hitzeschutzverglasung 1 umfasst. Das thermische Prozessaggregat kann beispielsweise ein Backofen oder ein Kaminofen sein. Die Hitzeschutzverglasung 1 umfasst eine Glas- oder Glaskeramikscheibe 3, auf welcher eine Titandioxid-Schicht 5 abgeschieden ist. Die Titandioxid-Schicht 5 ist mit zumindest einer Übergangsmetall-Verbindung, vorzugsweise einem Übergangsmetall-Oxid dotiert, so dass Ladungsträger in das Leitungsband eingebracht werden und die Titandioxid-Schicht damit einen Flächenwiderstand von höchstens 2MΩ aufweist. Die Glas- oder Glaskeramikscheibe weist einen Temperaturausdehnungskoeffizienten α von kleiner 4,2·10⁻⁶/K auf, so dass eine hohe Temperaturbeständigkeit einhergehend mit einer hohen Temperaturwechselbeständigkeit der Hitzeschutzverglasung erzielt wird.

Die Schichtdicke der Titandioxid-Schicht 5 wird so gewählt, dass zusätzlich zur Reflexion aufgrund der freien Ladungsträger ein interferenzoptischer Reflexionseffekt auftritt. Dabei wird die Schichtdicke der Titandioxid-Schicht an das auftreffende Infrarotstrahlungsspektrum angepasst. Insbesondere ist es zweckmäßig, die optische Dicke so zu wählen, dass die Wellenlänge des Maximums oder des Schwerpunkts des Strahlungsspektrums ähnlich oder gleich der vierfachen Schichtdicke ist, so dass die Schicht interferenzoptisch reflektierend für den energiereichsten Teil des Strahlungsspektrums wirkt. Vorzugsweise werden zur interferenzoptischen Reflexion der Temperaturstrahlung Schichtdicken im Bereich von 80 bis 250 Nanometer, besonders bevorzugt im Bereich von 100 bis 150 Nanometern gewählt.

Bei dem in Fig. 1 gezeigten einfachen Beispiel ist die Titandioxid-Schicht zumindest auf der dem Heißraum 12 abgewandten Seite der Glas- oder Glaskeramik-Scheibe angeordnet. Diese Ausführungsform der Erfindung ist günstig, um die Emissivität der Scheibe selber zu reduzieren. Die Hitzeschutzverglasung 1 wird im Betrieb der thermischen Prozeßaggregates 10 selber oft bis zu mehreren hundert Grad heiß. Die erfindungsgemäße Infrarotreflexionsfilter-Beschichtung auf der dem Heißraum 12 abgewandten Seite reduziert dann die Infrarot-Abstrahlung der Hitzeschutzverglasung 1. Bei der Auslegung der Schichtdicke der Titandioxid-Beschichtung 5 kann dabei insbesondere auch die spektrale Verteilung der von der Glas- oder Glaskeramikscheibe 3 abgestrahlten Infrarotstrahlung berücksichtigt werden. Typischerweise wird die Glas- oder Glaskeramikscheibe 3 verglichen mit dem Heißraum 12 längerwellige Infrarotstrahlung abstrahlen. Die Schichtdicke kann in diesem Fall je nach gewünschter Wirksamkeit also gegebenfalls etwas dicker ausgelegt werden, verglichen mit einer Abstimmung auf das Maximum der spektralen Emission aus dem Heißraum. Andererseits ist gerade im längerwelligen Infrarotbereich die Reflexion aufgrund der elektrischen Leitfähigkeit besonders wirksam. Eine sehr gute Reflektivität für die gesamte auf die Titandioxid-Schicht 5 treffende Infrarotstrahlung wird daher auch bei einer für kurzwelliges, beziehungsweise nahes Infrarot ausgelegten Schichtdicke erzielt. Daran wird auch deutlich, dass durch die Kombination einer interferenzoptisch und durch freie Ladungsträger reflektierenden Schicht eine Breitband-Reflexionswirkung erzielbar ist.

Anders als in dem in Fig. 1 gezeigten Beispiel kann alternativ oder zusätzlich auch die dem Heißraum 12 zugewandte Seite der Glas- oder Glaskeramikscheibe 3 mit einer erfindungsgemäßen Titandioxid-Beschichtung 5 versehen sein.

Gemäß einer Ausführungsform der Erfindung wird Niob als Übergangsmetall verwendet und das Niob als Nioboxid in die Titandioxid-Schicht eingebaut.

Es konnte gezeigt werden, dass sich die integrale Reflexion der Wärmestrahlung einer erfindungsgemäßen Hitzeschutzverglasung mit einer mit Niob dotierten Titandioxid-Schicht gegenüber einer undotierten TiO₂-Schicht um einen Faktor zwei steigern lässt. Dazu zeigt Fig. 2 die entsprechenden Reflexionsspektren.

In Versuchen mit Niob-dotiertem TiO₂ hat sich gezeigt, dass sich die Reflexion der Wärmestrahlung im praxisnahen Test um einen Faktor 2 gegenüber reinem TiO₂ steigern lässt. Dies lässt sich anhand der Reflexionsspektren gemäß Fig. 2 erklären. In Fig. 2 ist als durchgezogene Linie der spektrale Reflexionsgrad einer Glasscheibe mit einer reinen Titandioxid-Schicht gezeigt. Zum Vergleich ist als gestrichelte Linie spektrale Reflexionsgrad eine Glasscheibe mit einer mit vier Gewichtsprozent Nioboxid dotierten, erfindungsgemäßen Titandioxid-Schicht 5 gleicher Dicke gezeigt. Es ist anhand der Spektren erkennbar, dass sich die Reflexion signifikant bei vergleichbarer Schichtdicke erhöhen lässt. Insbesondere ist ersichtlich, dass mit der erfindungsgemäßen Beschichtung eine sehr breitbandige Erhöhung der Reflektivität im Bereich von 2000 Nanometer bis über 7000 Nanometer Wellenlänge erreicht wird.

Die Schichten zeigen außerdem eine anatase Kristallstruktur bei Abscheidung auf erwärmtem Substrat und bieten damit auch die prinzipielle Möglichkeit, in der Keramisierung verformbare Schichtsysteme herzustellen.

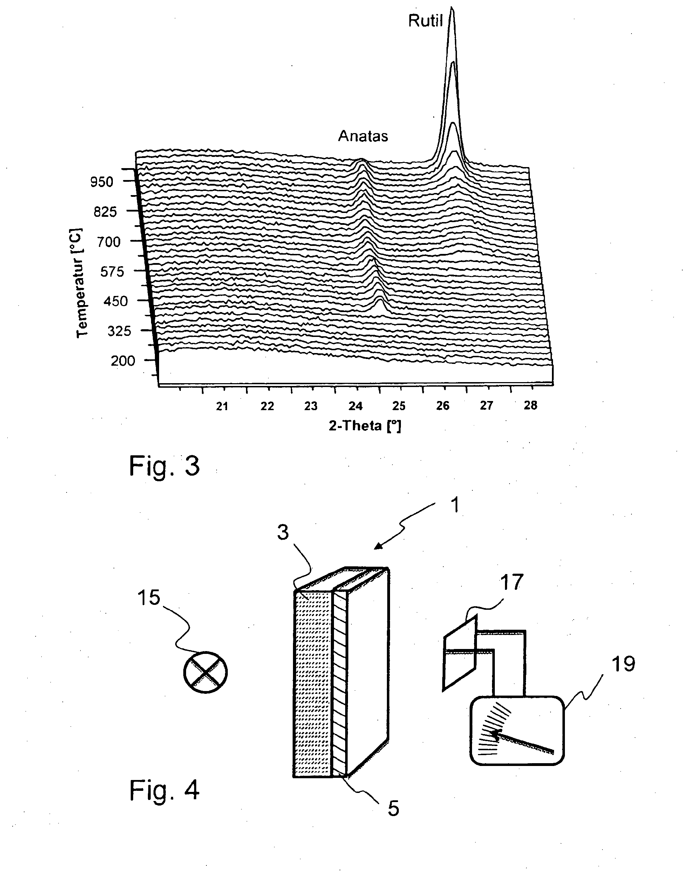

Fig. 3 zeigt dazu Röntgenbeugungsspektren, die an einer Niob-dotierten Titanoxidschicht nach verschiedenen Temperaturbelastungen aufgenommen wurden. Wie anhand der Spektren zu erkennen ist, findet eine signifikante Bildung von Rutil in der dotierten Schicht erst oberhalb von 900 °C statt. Weiterhin fällt auf, dass die Anatas-Phase nur einen schwachen Beugungspeak über dem durch eine röntgenamorphe Phase verursachten Untergrund zeigt, verglichen mit dem Beugungspeak des sich bei hohen Temperaturen bildenden Rutil.

Dafür zeigt der Beugungspeak des Anatas über den gesamten Temperaturbereich hinweg, in dem die Anatas-Phase auftritt, praktisch keine Veränderung der Intensität. Dies zeigt zum einen, dass die röntgenamorphe Phase im Bereich bis etwa 900 °C überwiegt und zum anderen, dass gerade die Schichtzusammensetzung aus röntgenamorpher Phase mit einem mengenmäßig geringeren Anteil der Anatas-Phase bis zu Temperaturen von 900°C thermisch sehr stabil ist.

Nachfolgend werden zwei Ausführungsbeispiele für die Herstellung einer erfindungsgemäßen Hitzeschutzverglasung erläutert:
Eine im grünen Zustand befindliche transparente Glaskeramik wird mit Niob-dotierten TiO₂ Schichten mittels gepulster oder ungepulster Magnetron-Sputtertechnologie von einem keramischen Nb₂O₅:TiO₂ Target mit einer Niob-Dotierung von 4 Gewichtsprozent gesputtert. Hierzu wird das glasige Substrat auf einem Carrier zunächst auf Temperaturen im Bereich von 250°C-400°C vorgeheizt, um im heißen Zustand den Sputterprozess zu beginnen.

Im anschließenden Sputterprozess werden die Schichten entweder bei reinem DC (also mit Gleichspannung) oder im gepulsten Modus mit Frequenzen von 5-20 kHz hergestellt, wobei Leitfähigkeiten im Bereich von 10⁻³ Ωcm erreicht werden. Damit einher geht die Ausprägung einer Plasmakante und damit eine Erhöhung der Reflexion im Infraroten.

Nach anschließender Abkühlung und Bearbeitung wie Zuschnitt und Kantenschliff wird diese Scheibe in einem Keramisierungsprozess in eine HQMK (Hochquarz-Mischkristall) und/oder KMK (Keatit-Mischkristall) Phase umgewandelt.

Eine gegebenenfalls durchgeführte Verformung der Scheibe wird ebenfalls während der Keramisierung durchgeführt. Die Nb:TiO₂ Beschichtung kann sich dabei auf der Seite der Form, auf der formabgewandten Seite der Scheibe oder auch beidseitig befinden.

In einer zweiten Ausführungsform wird Niob-dotiertes TiO₂ vom metallischen Nb:Ti Target mit einer Dotierung von 6 Gewichtsprozent gesputtert. Hierbei wird das Substrat nicht zusätzlich erwärmt, sondern im "kalten Zustand" beschichtet. Der Beschichtungsprozess erfolgt unter Reaktivgasregelung mittels Plasmaemissionsmonitoring bei Mittelfrequenzen im Bereich von 5-20 kHz. Die Leitfähigkeiten der Schichten wird im anschließenden Temperprozess bei ca. 400°C erzielt. Auch durch diesen Vorgang können Leitfähigkeiten im Bereich von 10⁻³ Ωcm erreicht werden.

Allgemein, ohne Beschränkung auf die vorstehenden Ausführungsbeispiele gibt es also zwei bevorzugte Varianten der Herstellung der Hitzeschutzverglasung: Gemäß einer ersten Variante wird die Schicht auf einer erwärmten, vorzugsweise auf mindestens 250°C°C erwärmten Glas- oder Glaskeramikscheibe abgeschieden. Gemäß einer weiteren Variante wird eine amorphe Schicht abgeschieden, die nachfolgend einem Temperprozess unterzogen wird, so dass sich eine Anatas-Phase in der dotierten Schicht ausbildet.

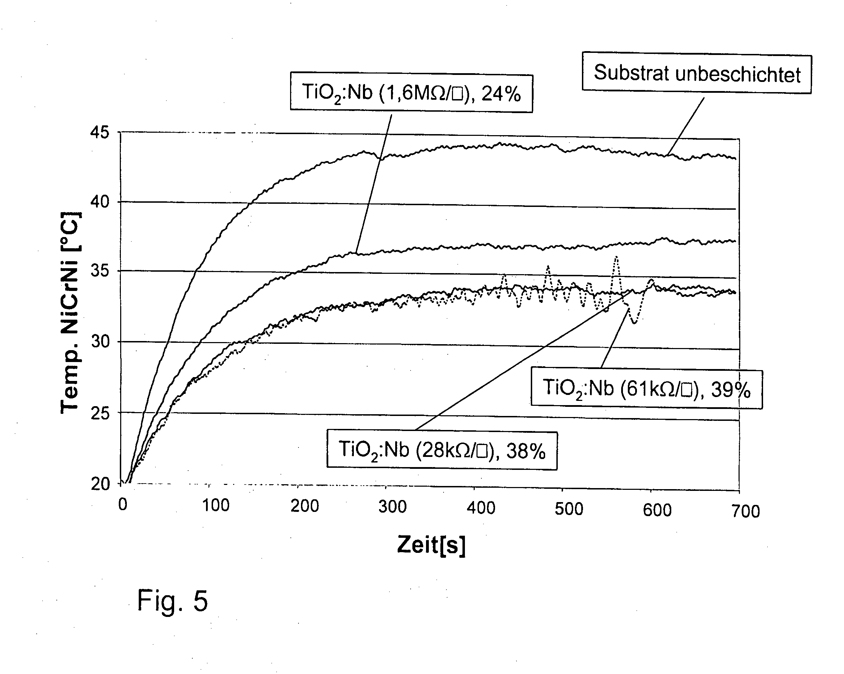

Die gute Langzeitbeständigkeit der Infrarotreflexionseigenschaften erfindungsgemäßer Hitzeschutzverglasungen wird nachfolgend anhand der Fig. 4 und 5 erläutert. Fig. 4 zeigt schematisch einen Messaufbau zur einfachen Messung der Effizienz von infrarotreflektierenden Beschichtungen. Eine Glas- oder Glaskeramik-Scheibe 3, im gezeigten Beispiel wieder eine einseitig mit einer dotierten Titandioxid-Schicht 5 beschichtete Scheibe wird zwischen einer Infrarot-Strahlungsquelle 15 und einem Temperaturfühler, beispielsweise einem Flächen-Thermoelement 17 angeordnet. Nach Einschalten der Infrarot-Strahlungsquelle 15 wird die Spannung des Flächen-Thermoelements mittels eines Messgerätes 19 gemessen und aufgezeichnet. Die Infrarotstrahlung, welche durch die Scheibe 3 hindurch auf das Thermoelement 17 fällt, erwärmt das Thermoelement. Demgemäß zeigt das Thermoelement 17 bei einer schlechteren Infrarotreflexion der Hitzeschutzverglasung 1 einen höheren Temperatur-Meßwert.

Fig. 5 zeigt in Abhängigkeit der Zeit aufgezeichnete Temperaturkurven, gemessen an verschiedenen Scheiben. Der Abstand des Temperaturfühlers, beziehungsweise speziell hier eines NiCr/Ni-Flächen-Thermoelements 17 zur Glas- oder Glaskeramikscheibe 5 betrug bei der Messung 11 Millimeter. Als Infrarot-Strahlungsquelle 15 wurde eine beheizte schwarze Platte in einem Abstand von 18 Millimetern zur Glas- oder Glaskeramikscheibe 5 verwendet.

Als Substrate für die in Fig. 5 gezeigten Messergebnisse wurden transparente Lithium-Aluminosilikat-Glaskeramikscheiben verwendet, die auch unter dem Handelsnamen ROBAX vertrieben werden. Erwartungsgemäß zeigt sich bei der unbeschichteten Glaskeramikscheibe der größte Temperaturanstieg. Als dotierte Titandioxidschichten 5 wurden wiederum Niob-dotierte TiO₂-Schichten mit variierendem Niob-Gehalt und entsprechend unterschiedlichen Flächenwiderständen abgeschieden. Die Flächenwiderstände der Schichten zu den einzelnen Kurven sind in der Figur ebenso wie die anhand der Messung ermittelte prozentuale Verminderung der Infrarot-Transmission angegeben. Bei einem Flächenwiderstand von 1,6 MΩ ergibt sich eine Verminderung der Infrarot-Transmission von 24% gegenüber dem unbeschichteten Substrat.

Die weiteren Kurven zeigen Messungen an Schichten mit 61 kΩ und 28kΩ Flächenwiderstand. Gegenüber der Schicht mit einem Flächenwiderstand von 1,6 MΩ ergibt sich nochmals eine deutliche Verminderung der Transmission, welche auf den größeren Beitrag der Reflexion an den freien Ladungsträgern und damit auf die Dotierung zurückzuführen ist.

Allerdings sind die Reflexionseigenschaften der Schichten sehr ähnlich, die Schicht mit 28kΩ Flächenwiderstand weist mit 38% eine Verminderung der Infrarot-Transmission auf, die nur noch um ein Prozent besser ist, als die der Schicht mit 61kΩ Flächenwiderstand. Da bei sehr niedrigen Flächenwiderständen auch die Transparenz abnimmt, ist es für viele Anwendungen daher günstig, Beschichtungen zu verwenden, die einen Flächenwiderstand von nicht weniger als 20 kΩ aufweisen.

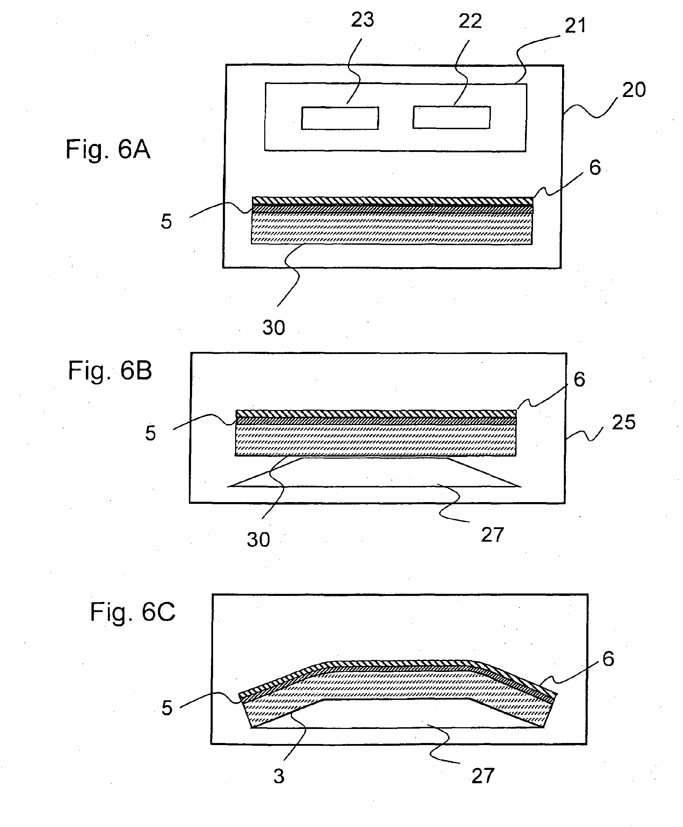

In den Fig. 6A bis 6C ist schematisch die Herstellung einer Hitzeschutzverglasung gemäß einem Ausführungsbeispiel dargestellt. Bereits weiter oben wurde dargelegt, dass die Beschichtung auch vor der Keramisierung eines Grünglases aufgebracht werden kann und dennoch nach der Keramisierung ihre Funktion erfüllt. Dabei ist gegebenenfalls auch eine Verformung möglich, um eine nicht ebene, mit Hochtemperatur-Infrarotreflexionsfilter-Beschichtung versehenen Glaskeramik-Scheibe zu erhalten. Fig. 6A zeigt dazu die in einer Vakuumkammer 20 einer Sputteranlage angeordnete Grünglas-Scheibe 30. In der Vakuumkammer 20 ist eine Magnetron-Sputtereinrichtung 21 mit einem Übergangsmetall-dotierten , beispielsweise Niob-dotierten Titan- oder Titanoxid-Target 22 angeordnet. Durch Sputtern dieses Targets wird die dotierte Titandioxidschicht 5 auf der Grünglas-Scheibe 30 abgeschieden.

Die Erfindung betrifft, wie oben erwähnt, insbesondere auch Hitzeschutzverglasungen, die eine hohe Transparenz im sichtbaren Spektralbereich aufweisen. Die erfindungsgemäßen dotierten Titandioxid-Schichten weisen daher im sichtbaren Spektralbereich gemittelt vorzugsweise eine Transmission von mindestens 60%, vorzugsweise mindestens 70% auf. Um die Transparenz im sichtbaren Spektralbereich weiter zu verbessern, kann nun die erfindungsgemäße dotierte Titandioxid-Beschichtung gemäß einer Weiterbildung der Erfindung mit einer im sichtbaren Spektralbereich wirksamen Antireflex-Beschichtung kombiniert werden. Dies ist auch deshalb günstig, da Titandioxid einen sehr hohen Brechungsindex aufweist, was zu starken und gegebenenfalls störenden Reflexionen führt.

Geeignet ist insbesondere eine niedrigbrechende Schicht, vorzugsweise eine SiO₂-Schicht, mit einer optischen Schichtdicke von λ/4 für eine Wellenlänge des sichtbaren Spektrums. Beispielsweise kann die Schicht als λ/4-Schicht für grünes Licht, etwa für eine Wellenlänge von 550 Nanometern ausgelegt werden. Für eine bei 550 Nanometer Wellenlänge wirksame λ/4-Schicht ergibt sich dann eine Schichtdicke von 550/(4·n) Nanometern, wobei n den Brechungsindex der Schicht bezeichnet.

Eine solche Antireflexbeschichtung kann insbesondere auch als Einzelschicht ausgebildet sein. Ein bevorzugter Schichtdickenbereich einer solchen Antireflex-Einzelschicht aus SiO₂, die auf der erfindungsgemäßen dotierten Titandioxidschicht abgeschieden wird, liegt zwischen 30 Nanometern und 90 Nanometern.
Bei dem in Fig. 6A gezeigten Beispiel ist dazu ein Silizium- oder Siliziumoxid-Target 23 angeordnet. Mit diesem Target wird mittels der Sputtereinrichtung 21 eine entsprechend dicke SiO₂-Schicht 6 auf der dotierten Titandioxid-Beschichtung abgeschieden.

Gemäß einem Ausführungsbeispiel der Erfindung wird die dotierte Titandioxidschicht mittels Mittelfrequenz-Sputtern abgeschieden. Hierzu wird die Scheibe in einem Vorbehandlungsschritt thermisch vorbehandelt, vorzugsweise bei einer Temperatur von 250 bis 450° C über eine Zeitdauer von mindestens 3 Minuten, vorzugsweise über 10 Minuten oder während dem Sputterprozess bei den genannten Temperaturen kontinuierlich beheizt.

Das Ausheizen erfolgt vorzugsweise im Vakuum und führt dazu, dass überschüssiges Wasser von der Substratoberfläche verdampft.

Anschließend wird die Scheibe in die Vakuumkammer 20 verbracht und die Titanoxidschicht wird unter einfachem oder mehrfachem Vorbeifahren an der Sputtereinrichtung reaktiv abgeschieden. Es kann dabei eine Pulsfrequenz von 5 bis 10 kHz eingestellt werden und auch eine hohe Sputterleistung von 15 W/cm² gewählt werden.

Durch den sich dabei einstellenden hohen Teilchenstrom bei gleichzeitig geringem Prozessdruck von etwa 10⁻³ mbar lassen sich dichte Titanoxidschichten mit den oben erläuterten Eigenschaften herstellen.

Der Prozess kann reaktiv von einem metallischen Titantarget gesputtert werden. Zur Stabilisierung des Prozesses ist dabei eine Regelung vorteilhaft.

Alternativ kann auch von einem keramischen TiO₂-Target gesputtert werden. Eine aufwendige Regelung der Plasmaintensität kann dann gegebenenfalls entfallen.

Nach der Beschichtung der Grünglas-Scheibe wird diese, wie in Fig. 6B gezeigt, in einen Keramisierungsofen 25 auf einen Träger 27 aufgelegt. Die Auflage des Trägers 27 kann eben geformt sein, um ebene Hitzeschutzverglasungen herzustellen. Bei dem gezeigten Beispiel weist der Träger 27 eine nicht ebene Auflage mit mehreren zueinander gewinkelten Teilflächen auf.

Die Grünglasscheibe 30 wird dann im Keramisierungsofen 25 auf die für die Keramisierung erforderliche Temperatur erhitzt, so dass die Keramisierung im Grünglas einsetzt. Dabei wird, wie in Fig. 6C gezeigt, die Grünglas-Scheibe so weich, dass sie der Form der Auflagefläche des Trägers 27 angepasst werden kann und demgemäß entsprechend verformt wird. Das Verformen kann im einfachsten Fall durch die vom Eigengewicht der Grünglasscheibe 30 verursachten Kräfte erfolgen. Möglich ist aber auch ein Anpressen oder ein Ansaugen an die Auflagefläche oder ein vorheriges Heissbiegen, beispielsweise mittels Gasbrenner.

Im Ergebnis wird eine nicht ebene, mit einer infrarotreflektierenden Titandioxid-Beschichtung 5 und einer im sichtbaren Spektralbereich wirksamen Antireflexschicht 6 versehene Glaskeramik-Scheibe 3 erhalten. In ähnlicher Weise ist das Verfahren auch für die Herstellung von Hitzeschutzverglasungen mit Glasscheiben geeignet. In diesem Fall wird die Glasscheibe mit der abgeschiedenen Beschichtung erwärmt und verformt, ohne dass es zu einer Keramisierung kommt.

Bei den bisher beschriebenen Ausführungsformen der Hitzeschutzverglasung ist die mit zumindest einer Übergangsmetall-Verbindung dotierte Titandioxid-Beschichtung 5 direkt auf der Oberfläche eines Glas- oder Glaskeramik-Substrats abgeschieden worden. Gemäß noch einer Weiterbildung der Erfindung kann aber auch eine Zwischenschicht vorgesehen werden. Insbesondere ist es hierbei in Weiterbildung der Erfindung vorgesehen, eine nicht mit einem Übergangsmetall dotierte, vorzugsweise reine Titandioxid-Beschichtung als Zwischenschicht zu verwenden.

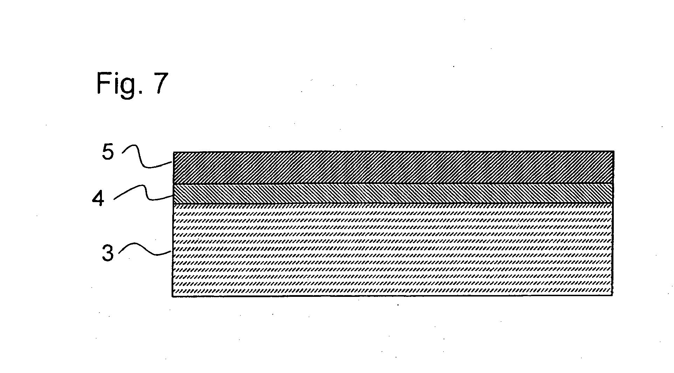

Fig. 7 zeigt dazu schematisch eine solche Ausführungsform der Hitzeschutzverglasung, bei welcher eine reine Titandioxid-Beschichtung als Zwischenschicht 4 auf der Glas- oder Glaskeramikscheibe 3 abgeschieden ist, wobei die Titandioxid-Schicht 5, welche mit zumindest einer Übergangsmetall-Verbindung dotiert ist, auf der Zwischenschicht 4 abgeschieden ist. Die reine Zwischenschicht kann vorteilhaft als Seed-Layer für die infrarotreflektierende dotierte Titandioxid-Schicht dienen, um etwa die Morphologie der dotierten Titandioxid-Schicht festzulegen und/oder zu stabilisieren. Die Zwischenschicht 4 kann, anders als in der schematischen Darstellung der Fig. 7 wesentlich dünner sein, als die dotierte Titandioxid-Beschichtung 5. Vorzugsweise beträgt die Schichtdicke der Zwischenschicht 4 höchstens ein Fünftel der Schichtdicke der dotierten Titandioxid-Beschichtung 5.

Die Zwischenschicht kann insbesondere mit einem Abscheideverfahren hergestellt werden, wie es in der deutschen Patentanmeldung mit der Nummer 10 2009 017 547 beschrieben ist. Der Inhalt dieser Patentanmeldung wird bezüglich des Abscheideverfahrens zur Herstellung einer Titandioxid-Zwischenschicht auch zum Gegenstand der vorliegenden Anmeldung gemacht. Vorzugsweise wird demgemäß die Glas- oder Glaskeramikscheibe vor dem Aufbringen der Zwischenschicht erwärmt, insbesondere auf 200 bis 400 °C, um die Haftbeständigkeit der Zwischenschicht zu verbessern. Die Zwischenschicht wird vorzugsweise durch Magnetron-Sputtern hergestellt, wobei reaktives Sputtern von einem metallischen Titantarget besonders geeignet ist. Zur Abscheidung ist eine Pulsfrequenz des elektromagnetischen Felds im Bereich von 5 bis 10 kHz und eine hohe Sputterleistung von 10 W/cm² oder mehr gewählt werden.

### Bezugszeichenliste:

- 1: Hitzeschutzverglasung
- 3: Glas- oder Glaskeramikscheibe
- 4: Zwischenschicht
- 5: Titandioxid-Beschichtung
- 10: thermisches Prozessaggregat
- 11: Wandung von 12
- 12: Heißraum
- 13: Fenster
- 15: Infrarot-Strahlungsquelle
- 17: Flächen-Thermoelement
- 19: Meßgerät
- 20: Vakuumkammer
- 21: Magnetron-Sputtervorrichtung
- 22: Nb:Ti-Target
- 23: Si-Target
- 25: Keramisierungsofen
- 27: Träger für 30
- 30: Grünglas-Scheibe

## Patentansprüche

1. Thermisches Prozessaggregat mit einem Heißraum und einem den Heißraum abschließenden Fenster, welches eine Hitzeschutzverglasung mit einer Hochtemperatur-Infrarotreflexionsfilter-Beschichtung umfasst, wobei die Hitzeschutzverglasung eine Glas- oder Glaskeramikscheibe mit einem linearen Temperaturausdehnungskoeffizienten α von kleiner 4,2·10⁻⁶/K umfasst, wobei auf zumindest einer Seite der Glas- oder Glaskeramikscheibe eine Titandioxid-Schicht abgeschieden ist, welche mit einer Verbindung zumindest eines der Übergangsmetalle Nb, Ta, Mo, V, vorzugsweise einem Übergangsmetall-Oxid dotiert ist, so dass die Titandioxid-Schicht einen Flächenwiderstand von höchstens 2MΩ aufweist, und wobei die Titandioxid-Schicht eine Schichtdicke aufweist, deren optische Dicke einem Viertel der Wellenlänge des Maximums eines Schwarzkörperstrahlers mit einer Temperatur zwischen 400 °C und 3000 °C entspricht.

2. Thermisches Prozessaggregat gemäß dem vorstehenden Anspruch, **dadurch gekennzeichnet, dass** die Titandioxid-Schicht mindestens eine Kristallphase enthält.

3. Thermisches Prozessaggregat gemäß dem vorstehenden Anspruch, **dadurch gekennzeichnet, dass** die Titandioxid-Schicht eine Anatas-Kristallphase enthält.

4. Thermisches Prozessaggregat gemäß einem der vorstehenden Ansprüche, **dadurch gekennzeichnet, dass** die Titandioxid-Schicht eine röntgenamorphe Phase enthält.

5. Thermisches Prozessaggregat gemäß vorstehendem Anspruch, **dadurch gekennzeichnet, dass** der Stoffmengenanteil der röntgenamorphen Phase größer ist, als der Stoffmengenanteil der Anatas-Kristallphase.

6. Thermisches Prozessaggregat gemäß vorstehendem Anspruch, wobei die Anatas-Kristallphase gegenüber weiteren Kristallphasen mindestens überwiegt, vorzugsweise wobei die Anatas-Kristallphase die einzige vorhandene Kristallphase der Titandioxid-Schicht ist.

7. Thermisches Prozessaggregat gemäß einem der vorstehenden Ansprüche, **gekennzeichnet durch** eine reine Titandioxid-Beschichtung als Zwischenschicht auf der Glas- oder Glaskeramikscheibe, wobei die Titandioxid-Schicht, welche mit zumindest einer Übergangsmetall-Verbindung dotiert ist, auf der zwischenschicht abgeschieden ist.

8. Thermisches Prozessaggregat gemäß einem der vorstehenden Ansprüche, **gekennzeichnet durch** eine Antireflex-Einzelschicht aus SiO₂, die auf der Titandioxid-Schicht abgeschieden ist und eine Schichtdicke im Bereich von 30 Nanometern bis 90 Nanometern aufweist.

9. Thermisches Prozessaggregat gemäß einem der vorstehenden Ansprüche, **dadurch gekennzeichnet, dass** die Titandioxid-Schicht zumindest auf der dem Heißraum abgewandten Seite der Glas- oder Glaskeramik-Scheibe angeordnet ist.

10. Verfahren zur Herstellung einer Hitzeschutzverglasung eines thermischen Prozessaggregats mit Hochtemperatur-Infrarotreflexionsfilter- Beschichtung, bei welchem auf einer Glas- oder Glaskeramik-Scheibe eine mit einer Verbindung zumindest eines der Übergangsmetalle Nb, Ta, Mo dotierte Titandioxid-Schicht abgeschieden wird, die so dotiert ist, dass deren Flächenwiderstand höchstens 2MΩ beträgt und deren optische Dicke einem Viertel der Wellenlänge des Maximums eines Schwarzkörperstrahlers mit einer Temperatur zwischen 400 °C und 3000 °C entspricht.

11. Verfahren gemäß dem vorstehenden Anspruch, **dadurch gekennzeichnet, dass** die Titandioxid-Schicht durch Sputtern abgeschieden wird.

12. Verfahren gemäß einem der beiden vorstehenden Ansprüche, **dadurch gekennzeichnet, dass** die Titandioxid-Schicht auf einer Glasscheibe abgeschieden wird und die beschichtete Glasscheibe anschließend keramisiert wird, so dass eine mit der dotierten Titandioxidschicht beschichtete Glaskeramik-Scheibe mit einem linearen Temperaturausdehnungskoeffizienten a von kleiner 4,2·10⁻⁶/K erhalten wird.

13. Verfahren gemäß einem der drei vorstehenden Ansprüche, **dadurch gekennzeichnet, dass** die Titandioxid-Schicht mit einer Schichtdicke abgeschieden wird, die im Bereich von 80 bis 250 Nanometer, vorzugsweise 100 bis 150 Nanometern liegt.

14. Verfahren gemäß einem der vier vorstehenden Ansprüche, **dadurch gekennzeichnet, dass** die Titandioxid-Schicht auf einer auf zumindest 250°C vorgeheizten Glas- oder Glaskeramik-Scheibe als Anatas-haltige Schicht abgeschieden wird.

15. Verfahren gemäß einem der vorstehenden Ansprüche, **dadurch gekennzeichnet, dass** die Glas- oder Glaskeramikscheibe nach der Abscheidung der Hochtemperatur-Infrarotreflexionsfilter-Beschichtung verformt wird.

16. Verfahren gemäß einem der vorstehenden Ansprüche, **dadurch gekennzeichnet, dass** eine Titandioxidschicht abgeschieden wird, die mit einer Übergangsmetall-Verbindung im Bereich von 1 bis 10 Gewichtsprozent dotiert wird.

## Claims

1. A thermal process aggregate having a hot chamber, and a window closing the hot chamber, the window comprising a heat protection glazing with a high temperature infrared reflection filter coating, wherein the heat protection glazing comprises a glass or glass ceramics disk with a linear coefficient of thermal expansion α < 4.2·10⁻⁶/K, wherein on at least one side of the glass or glass ceramics disk a titanium dioxide layer is deposited which is doped with a compound of one of the transition metals Nb, Ta, Mo, V, preferably with a transition metal oxide so that the titanium dioxide layer has a maximum surface resistivity of 2MΩ, and wherein the titanium dioxide layer has a layer thickness whose optical thickness corresponds to a quarter of the wavelength of the maximum of a black body emitter with a temperature between 400°C and 3000 °C.

2. The thermal process aggregate as claimed in the preceding claim, **characterized in that** the titanium dioxide layer contains a least one crystal phase.

3. The thermal process aggregate as claimed in the preceding claim, **characterized in that** the titanium dioxide layer contains an anastase crystal phase.

4. The thermal process aggregate as claimed in one of the preceding claims, **characterized in that** the titanium dioxide layer contains an X-ray-amorphous phase.

5. The thermal process aggregate as claimed in the preceding claim, **characterized in that** the substance amount fraction of the X-ray-amorphous phase is greater than the substance amount fraction of the anastase crystal phase.

6. The thermal process aggregate as claimed in the preceding claim, wherein the anastase crystal phase at least overbalances further crystal phases, preferably wherein the anastase crystal phase is the only existent crystal phase of the titanium dioxide layer.

7. The thermal process aggregate as claimed in one of the preceding claims, **characterized by** a pure titanium dioxide coating as intermediate layer on the glass or glass ceramics disk, wherein the titanium dioxide layer doped with at least one transition metal compound is deposited on the intermediate layer.

8. The thermal process aggregate as claimed in one of the preceding claims, **characterized by** an antireflection single layer made of SiO₂, the antireflection single layer deposited on the titanium dioxide layer and having a layer thickness in the range from 30 nanometres to 90 nanometres.

9. The thermal process aggregate as claimed in one of the preceding claims, **characterized in that** titanium dioxide layer is arranged at least on the side of the glass or glass ceramics layer, facing away from the hot chamber.

10. A method for producing a heat protection glazing of a thermal process aggregate having a high temperature infrared reflection filter coating, with which method a titanium dioxide layer doped with a compound of at least one of the transition metals Nb, Ta, Mo is deposited on a glass or glass ceramics disk, the layer doped such that its maximum surface resistivity is 2MΩ, and that its optical thickness corresponds to a quarter of the wavelength of the maximum of a black body emitter with a temperature between 400°C and 3000 °C.

11. The method as claimed in the preceding claim, **characterized in that** the titanium dioxide layer is deposited by means of sputtering.

12. The method as claimed in one of the two preceding claims, **characterized in that** the titanium dioxide layer is deposited on a glass disk, and the coated glass disk is subsequently ceramized so that a glass ceramics disk coated with the doped titanium dioxide layer is obtained, the disk having a linear coefficient of thermal expansion
α < 4.2·10⁻⁶/K.

13. The method as claimed in one of the three preceding claims, **characterized in that** the titanium dioxide layer is deposited with a layer thickness which is in the range from 80 to 250 nanometres, preferably 100 to 150 nanometres.

14. The method as claimed in one of the four preceding claims, **characterized in that** the titanium dioxide layer is deposited as an anastase containing layer, on a glass or glass ceramics disk preheated to at least 250°C.

15. The method as claimed in one of claims 10 to 14, **characterized in that** the glass or glass ceramics disk is deformed, after depositing the high temperature infrared reflection filter coating.

16. The method as claimed in one of claims 10 to 15, **characterized in that** a titanium dioxide layer is deposited which is doped with a transition metal compound, in the range of 1 to 10 weight percent.

## Revendications

1. Agrégat de processus thermique avec une enceinte chaude et une fenêtre fermant l'enceinte chaude, laquelle comprend une vitre de protection thermique avec un revêtement filtrant haute température réfléchissant les infrarouges, la vitre de protection thermique étant une vitre en verre ou en vitrocéramique avec un coefficient de dilatation thermique linéaire α inférieur à 4,2·10⁻⁶/K, une couche de dioxyde de titane étant déposée sur au moins une face de la vitre en verre ou en vitrocéramique, laquelle est dopée avec un composé d'au moins un des métaux de transition Nb, Ta, Mo, V, préférentiellement un oxyde de métal de transition, si bien que la couche de dioxyde de titane présente une résistance surfacique maximale de 2 MΩ, et la couche de dioxyde de titane présentant une épaisseur de couche dont l'épaisseur optique correspond à un quart de la longueur d'onde du maximum d'un corps noir avec une température comprise entre 400°C et 3000°C.

2. Agrégat de processus thermique selon la revendication précédente, **caractérisé en ce que** la couche de dioxyde de titane contient au moins une phase cristalline.

3. Agrégat de processus thermique selon la revendication précédente, **caractérisé en ce que** la couche de dioxyde de titane contient une phase cristalline anatase.

4. Agrégat de processus thermique selon l'une des revendications précédentes, **caractérisé en ce que** la couche de dioxyde de titane contient une phase amorphe aux rayons X.

5. Agrégat de processus thermique selon la revendication précédente, **caractérisé en ce que** la fraction molaire de la phase amorphe aux rayons X est supérieure à la fraction molaire de la phase cristalline anatase.

6. Agrégat de processus thermique selon la revendication précédente, dans lequel la phase cristalline anatase est au moins majoritaire par rapport à d'autres phases cristallines, préférentiellement dans lequel la phase cristalline anatase est la seule phase cristalline présentée pour la couche de dioxyde de titane.

7. Agrégat de processus thermique selon l'une des revendications précédentes, **caractérisé par** un revêtement de dioxyde de titane pur en tant que couche intercalaire sur la vitre en verre ou en vitrocéramique, la couche de dioxyde de titane dopée avec au moins un composé métallique de transition étant déposée sur la couche intercalaire.

8. Agrégat de processus thermique selon l'une des revendications précédentes, **caractérisé par** une couche simple antiréfléchissante en SiO₂ déposée sur la couche de dioxyde de titane et présentant une épaisseur de couche comprise entre 30 nanomètres et 90 nanomètres.

9. Agrégat de processus thermique selon l'une des revendications précédentes, **caractérisé en ce que** la couche de dioxyde de titane est disposée au moins sur la face de la vitre en verre ou en vitrocéramique distante de l'enceinte chaude.

10. Procédé de fabrication d'une vitre de protection thermique d'un agrégat de processus thermique avec un revêtement filtrant haute température réfléchissant les infrarouges, dans lequel une couche de dioxyde de titane dopée avec un composé d'au moins un des métaux de transition Nb, Ta, Mo est déposée sur la vitre en verre ou en vitrocéramique, laquelle est dopée de telle manière que sa résistance surfacique maximale soit de 2 MΩ, et que son épaisseur optique corresponde à un quart de la longueur d'onde du maximum d'un corps noir avec une température comprise entre 400°C et 3000°C.

11. Procédé selon la revendication précédente, **caractérisé en ce que** la couche de dioxyde de titane est déposée par pulvérisation.

12. Procédé selon l'une des deux revendications précédentes, **caractérisé en ce que** la couche de dioxyde de titane est déposée sur une vitre en verre et **en ce que** la vitre en verre revêtue est céramisée ensuite de manière à obtenir une vitre en vitrocéramique revêtue de la couche de dioxyde de titane dopée avec un coefficient de dilatation thermique linéaire α inférieur à 4,2·10⁻⁶/K.

13. Procédé selon l'une des trois revendications précédentes, **caractérisé en ce que** la couche de dioxyde de titane est déposée avec une épaisseur de couche comprise entre 80 et 250 nanomètres, préférentiellement entre 100 et 150 nanomètres.

14. Procédé selon l'une des quatre revendications précédentes, **caractérisé en ce que** la couche de dioxyde de titane est déposée en tant que couche à teneur en anatase sur une vitre en verre ou en vitrocéramique pré-chauffée à au moins 250°C.

15. Procédé selon l'une des revendications précédentes, **caractérisé en ce que** la vitre en verre ou en vitrocéramique est déformée après dépôt du revêtement filtrant haute température réfléchissant les infrarouges.

16. Procédé selon l'une des revendications précédentes, **caractérisé en ce qu'**une couche de dioxyde de titane est déposée, laquelle est dopée avec un composé métallique de transition en une teneur de 1 à 10 % en poids.
